# EUROPÄISCHE PATENTSCHRIFT

(11) **EP 0 688 404 B1**
(45) Veröffentlichungstag und Bekanntmachung des Hinweises auf die Patenterteilung: **02.01.1997**
(21) Anmeldenummer: 94904964.7
(22) Anmeldetag: 27.01.1994
(51) Int. Cl.: F16D 65/56, F16D 65/16

(54) **DRUCKLUFTBETÄTIGTE SCHEIBENBREMSE**
COMPRESSED-AIR DISC BRAKE
FREIN A DISQUE PNEUMATIQUE

(30) Priorität: 18.03.1993 DE 4308704
(43) Veröffentlichungstag der Anmeldung: 27.12.1995
(73) Patentinhaber: KNORR-BREMSE SYSTEME FÜR NUTZFAHRZEUGE GmbH, 80809 München (DE)
(72) Erfinder: BAUMGARTNER, Hans, D-85368 Moosburg (DE); BIEKER, Dieter, D-81827 München (DE)
(86) Internationale Anmeldenummer: DE9400061
(87) Internationale Veröffentlichungsnummer: WO9421936

(56) Entgegenhaltungen:
- EP-A- 0 569 031
- DE-A- 3 536 562
- DE-A- 4 032 885

## Beschreibung

Die vorliegende Erfindung bezieht sich auf eine druckluftbetätigte Scheibenbremse gemäß dem Oberbegriff des Anspruchs 1, die insbesondere für Straßennutzfahrzeuge vorgesehen ist.

Druckluftbetätigte bzw. pneumatische Scheibenbremsen der gattungsgemäßen Art sind beispielsweise aus der DE-OS 37 16 202, der DE-OS 40 32 885 sowie aus der nicht vorveröffentlichten DE-OS 42 12 384 bekannt. Bei diesen bekannten Scheibenbremsen wird eine Bremsscheibe von einem in Axialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen die betreffende Reibfläche der Bremsscheibe gedrückt wird, worauf sich der Bremssattel aufgrund der Reaktionskräfte in Gegenrichtung verschiebt und dadurch eine auf der gegenüberliegenden Seite befindliche Bremsbacke gleichfalls gegen die Bremsscheibe preßt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der zwei mit einem Außengewinde versehene Stellspindeln in einem jeweils zugeordneten Innengewinde der Traverse in paralleler Anordnung verstellbar verschraubt sind. Aufgrund der Verwendung zweier Stellspindeln wird eine derartige Zuspannvorrichtung auch als "zweispindelige" Zuspannvorrichtung bezeichnet.

Die beiden Stellspindeln wirken jeweils über ein an ihrem bremsscheibenseitigen Ende sitzendes Druckstück auf die zuspannseitig im Bremssattel bezüglich der Bremsscheibe verschiebbar gelagerte Bremsbacke ein. Mittels mindestens einer Nachstelleinrichtung, die axial verschiebbar, jedoch drehfest mit einer der beiden Stellspindeln gekoppelt ist und bei jeder Betätigung des Drehhebels über eine Rutschkupplung auf die betreffende Stellspindel einwirkt, wird ereicht, daß das sich infolge Belagverschleiß ändernde Lüftspiel seinen korrekten Sollwert konstant beibehält. Die von der Nachstelleinrichtung im Falle von Belagverschleiß bewirkte Drehung der genannten Stellspindel wird von einer Synchronisationseinrichtung so auf die andere Stellspindel übertragen, daß diese um den gleichen Winkel gedreht wird und folglich ihren Abstand zur Bremsscheibe um exakt die gleiche Wegstrecke verringert.

Im einfachsten Fall ist in der genannten zweiten Stellspindel lediglich eine Midtnehmervorrichtung angeordnet, welche diese Stellspindel drehfest mit der Synchronisationseinrichtung koppelt und beispielsweise aus einem in eine innere Axialverzahnung der Stellspindel eingreifenden Zahnrad gebildet sein kann, das über eine Welle mit der Synchronisationseinrichtung gekoppelt ist. Jedoch kann für die zweite Stellspindel gleichfalls eine eigene Nachstelleinrichtung vorgesehen sein, wobei in diesem Fall doppelt so große Nachstellkräfte erzielbar sind, was jedoch mit entsprechend höheren Herstellungskosten verbunden ist; darüber hinaus kann auch bei Verwendung von zwei Nachstelleinrichtungen nicht auf eine Synchronisationeinrichtung verzichtet werden, da eine exakt synchrone Arbeitsweise beider Nachsteller zur Gewährleistung eines gleichmäßigen Bremsbelag-Abriebs unabdingbar ist, um das Auftreten von Umfangsschrägverschleiß, d.h. der ungleichmäßigen Abnutzung der Bremsbeläge in tangentialer oder Umfangsrichtung der Bremsscheibe, sicher zu verhindern.

Die Synchronisationseinrichtung der bekannten Zuspannvorrichtungen besteht in der derzeit gebräuchlichsten Ausführungsform aus einem Zahnriemen oder einer Gliederkette, der bzw. die jeweils mit einem Zahnrad der Nachstelleinrichtung und einem weiteren Zahnrad der Mitnehmervorrichtung bzw. der anderen Nachstelleinrichtung gekoppelt ist, so daß ein Umschlingungsgetriebe gebildet wird. Alternativ hierzu ist es auch bekannt, den Zahnriemen bzw. die Gliederkette durch eine ungerade Anzahl von zwischengeschalteten Zahnrädern zu ersetzen; jedoch ist diese Lösung aufgrund der zahlreichen erforderlichen Lager sehr aufwendig und entsprechend teuer.

Die mit der jeweiligen Nachstelleinrichtung und/oder der Mitnehmervorrichtung gekoppelten Zahnräder sind in gebräuchlichen Ausführungsformen am bremsscheibenabgewandten Ende dieser Funktionselemente vorgesehen, so daß eine "außenliegende" Synchronisationseinrichtung gebildet wird; eine derartige außenliegende Synchronisationseinrichtung ermöglicht zwar eine sehr gute Zugänglichkeit und damit eine erleichterte Wartung, jedoch sind hierfür mehrere zusätzliche Abdeckbauteile erforderlich, die einerseits die Herstellungskosten erhöhen und andererseits das Risiko einer in jedem Fall zu vermeidenden Gehäuse-Undichtigkeit aufgrund der zusätzlichen Abdichtungsstellen deutlich erhöhen.

Zur Vermeidung dieser Probleme sind daher auch "innenliegend" angeordnete Synchronisationseinrichtungen in Erwägung gezogen worden, bei denen die Zahnräder der Nachstelleinrichtung und/oder der Mitnehmervorrichtung sowie der Zahnriemen bzw. die Kette ungefähr auf Höhe des Exzenters der Traverse angeordnet sind. Diese Anordnung bereitet jedoch in diesem funktionell wichtigen Bereich der Zuspannvorrichtung erhebliche Platzprobleme, so daß eine Vergrößerung der Gehäuseabmessungen ggf. unvermeidlich ist. Darüber hinaus ist die Wartung erheblich schwieriger als bei einer außenliegenden Anordnung der Synchronisationseinrichtung.

Der Erfindung liegt die Aufgabe zugrunde, eine druckluftbetätigte Scheibenbremse gemäß dem Oberbegriff des Anspruchs 1 zu schaffen, deren Synchronisationseinrichtung sich durch einen platzsparenden Aufbau und hohe Wartungsfreundlichkeit unter Vermeidung jeglicher Dichtigkeitsprobleme auszeichnet.

Diese Aufgabe wird erfindungsgemäß mit den im Kennzeichnungsteil des Anspruchs 1 angegebenen Maßnahmen gelöst.

Erfindungsgemäß besteht die Synchronisationseinrichtung demzufolge aus einer im wesentlichen im Bereich der Achse des Exzenters verlaufenden Welle, die an jeder Stirnseite ein Kegelrad aufweist, das mit einem entsprechenden Kegelrad der Nachstelleinrichtung bzw. der Mitnehmervorrichtung kämmt, so daß ein entsprechender Winkeltrieb gebildet wird. Diese die im Stand der Technik üblichen Zahnriemen oder Gliederketten ersetzende Welle benötigt keinerlei zusätzlichen Platz, so daß die Synchronisationseinrichtung ohne nennenswerten Einfluß auf die Platzverhältnisse im Inneren der Zuspannvorrichtung eingebaut werden kann. Darüber hinaus ist die Welle konstruktiv einfacher als ein Zahnriemen oder eine Gliederkette, so daß Wartungsarbeiten bereits aus diesem Grund wesentlich seltener durchzuführen sind. Schließlich werden durch die Anordnung der erfindungsgemäßen Synchronisationseinrichtung auch keinerlei Dichtigkeitsprobleme hervorgerufen.

Wenn entsprechend dem ersten Ausführungsbeispiel der oben genannten DE-OS 42 12 384, auf deren Offenbarung hier vollinhaltlich bezug genommen sei, der Exzenter der Zuspannvorrichtung durch eine Walze gebildet ist, die in der Traverse und im Drehhebel jeweils in einem schalenförmigen Lagerbett ruht, dann ist es gemäß der Lehre des Anspruchs 2 von besonderem Vorteil, wenn diese Exzenterwalze gleichzeitig als Welle der Synchronisationseinrichtung dient. Die Synchronisationseinrichtung kann dann nämlich äußerst kostengünstig hergestellt werden, da die Exzenterwalze lediglich durch Vorsehen entsprechender Kegelräder modifiziert zu werden braucht - was gemäß Anspruch 3 besonders vorteilhaft durch einstückige Ausbildung der Kegelräder mit der Exzenterwalze geschehen kann - und im übrigen nur noch die zwei Kegelräder für die Nachstelleinrichtung bzw. die Mitnehmervorrichtung benötigt werden.

Im übrigen zeichnet sich diese Ausführungsform der erfindungsgemäßen Synchronisationseinrichtung noch durch zwei weitere Vorteile aus: Zum einen stehen die seitlichen Kegelräder in der bevorzugten Ausführungsform ein gewisses Maß über, so daß eine axiale Sicherung der Exzenterwalze auf der Traverse erreicht wird. Zum anderen wird jede unerwünschte Veränderung der Position der beiden Stellspindeln, die auf Vibrationen oder dergleichen zurückzuführen ist, durch die Exzenterwalze sicher verhindert, und zwar ohne daß eine zusätzliche Bremseinrichtung erforderlich wäre. Dieser positive Effekt ist darauf zurückzuführen, daß die Traverse auch im unbetätigten Zustand der Bremse durch eine Druckfeder zum Drehhebel hin vorgespannt ist, so daß die Exzenterwelle durch entsprechende Reibungskräfte an einer selbstätigen Drehung gehindert ist; gleichwohl reicht das auf die Nachstelleinrichtung ausgeübte Nachstell-Drehmoment zu jeder Zeit völlig aus, diese Reibungskräfte zu überwinden, so daß die als Synchronisationseinrichtung arbeitende Exzenterwalze die sichere Nachstellung nicht beeinträchtigt. Erst wenn das Lüftspiel beider Bremsbacken voll überwunden ist, tritt eine so hohe Kraftbeaufschlagung auf, daß die Exzenterwalze nicht mehr gedreht werden kann, da das traversenseitige Lagerbett einen mehrfach höherern Reibbeiwert als das hebelseitige Lagerbett aufweist; jedoch ist zu diesem Zeitpunkt ohnehin keine Nachstellbewegung mehr erwünscht, weshalb dieser Effekt eher von Vorteil als von Nachteil ist.

Falls dennoch eine völlige Entkoppelung der Synchronisationseinrichtung von irgendwelchen Reibungskräften erwünscht sein sollte oder falls dies aus noch anderen Gründen Vorteile bietet, kann gemäß der im Anspruch 4 angegebenen alternativen Ausführungsform der Exzenterwalze diese als rohrförmiges Teil ausgebildet sein, dessen Innenbohrung als Lagerung einer entsprechend dimensionierten Welle dient, an deren Stirnseiten jeweils ein Kegelrad, z.B. durch Verschraubung, befestigt wird.

Wenn entsprechend den weiteren Ausführungsbeispielen der oben genannten DE-OS 42 12 384 der Exzenter der Zuspannvorrichtung demgegenüber einstückig mit der Traverse oder mit dem Drehhebel ausgebildet ist, so wird für die erfindungsgemäße Synchronisationseinrichtung nach der vorteilhaften Lehre des Anspruchs 5 eine Längsbohrung im Exzenter ausgebildet, die zur Lagerung der Welle der Synchronisationseinrichtung dient. Diese Art der Ausbildung bzw. Lagerung entspricht funktionell der vorstehend erläuterten Verwendung einer Hohlwalze für den beidseitig gelagerten Exzenter.

Falls der Einbauraum und insbesondere der realisierbare Durchmesser des einstückig mit der Traverse bzw. mit dem Drehhebel ausgebildeten Exzenters sowie der jeweilige Durchmesser der Synchronisationswelle dies zulassen, so kann es in Übereinstimmung mit der Lehre des Anspruchs 6 von Vorteil sein, die Längsbohrung exzentrisch zur Längsachse des Exzenters anzuordnen, und zwar vorzugsweise konzentrisch zur Drehachse des Drehhebels. Diese Maßnahme hat nämlich den vorteil, daß die in dieser Längsbohrung gelagerte Synchronisationswelle bei Betätigung des Drehhebels ihre axiale Relativlage zu den Kegelrädern der Nachstelleinrichtung bzw. der Mitnehmervorrichtung kaum bzw. gar nicht ändert. Damit kann erreicht werden, daß diese Kegelräder mit denen der Welle selbst dann in Eingriff bleiben, wenn sich die Traverse und damit der Exzenter bei Betätigung des Drehhebels zur Bremsscheibe hin bewegen.

Jedoch sei darauf hingewiesen, daß, wie Untersuchungen belegt haben, eine derartige teilweise Verringerung des gegenseitigen Eingriffs der den Winkeltrieb bildenden Kegelräder in der Praxis bei geeigneter Dimensionierung keine Rolle spielt, da eine eventuell von der Nachstelleinrichtung bereits eingeleitete Verstellung spätestens dann zur anderern Stellspindel übertragen wird, wenn sich die Traverse nach Ende des betreffenden Bremsvorgangs wieder in ihre Ruhelage zurückbewegt, da dann die Kegelräder wieder in (vollständigen) Eingriff geraten. Somit treten durch diesen Effekt auch bei den vorstehend geschilderten Synchronisationseinrichtungen keine Probleme auf, bei denen die Synchronisationsbewegung von der Exzenterwalze oder einer in dieser gelagerten Welle übertragen wird und somit keine derartige Verschiebung der Drehachse der Welle realisierbar ist.

Dennoch kann gemäß der vorteilhaften Weiterbildung des Anspruchs 8 ein kontinuierlich guter Eingriff der Kegelräder auch bei einer derartigen Ortsverschiebung der Achse der Synchronisationswelle (Exzenterwalze bzw. in ihr gelagerte Welle) erreicht werden, wenn die Kegelräder der Nachstelleinrichtung bzw. der Mitnehmervorrichtung an dieser jeweils axial verschiebbar befestigt werden, so daß ggf. unter zusätzlicher Verwendung eines Federelements eine Nachführung dieser Kegelräder zu denen der Welle erreicht werden kann.

Weitere vorteilhafte Weiterbildungen der Erfindung können beispielsweise in der zusätzlichen Verwendung eines Gleitlagers für die Synchronisationswelle (siehe Anspruch 7) oder in der Verwendung von Kunststoffmaterial für die Kegelräder (Anspruch 9) liegen.

Die Erfindung wird nunmehr nachstehend anhand der Beschreibung von Ausführungsbeispielen unter Bezugnahme auf die Zeichnung näher erläutert. Es zeigen:
Fig. 1 anhand eines Querschnitts den schematischen Aufbau der Zuspannvorrichtung mit einem als Walze ausgebildeten Exzenter;
Fig. 2 einen Längsschnitt der in Fig. 1 gezeigten Zuspannvorrichtung;
Fig. 3 anhand eines Teilquerschnitts der Fig. 2 die Hebelmechanik und die darin angeordnete Synchronisationseinrichtung;
Fig. 4 einen weiteren Längsschnitt der in Fig. 1 gezeigten Zuspannvorrichtung mit einer alternativen Ausführungsform der erfindungsgemäßen Synchronisationseinrichtung;
Fig. 5 anhand eines Teilquerschnitts der Fig. 4 die Hebelmechanik und die darin angeordnete Synchronisationseinrichtung; und
Fig. 6, 7 und 8 die Anordnung der Synchronisationseinrichtung bei einer Ausführungsform der Zuspannvorrichtung mit einstückig ausgebildetem Exzenter.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden.

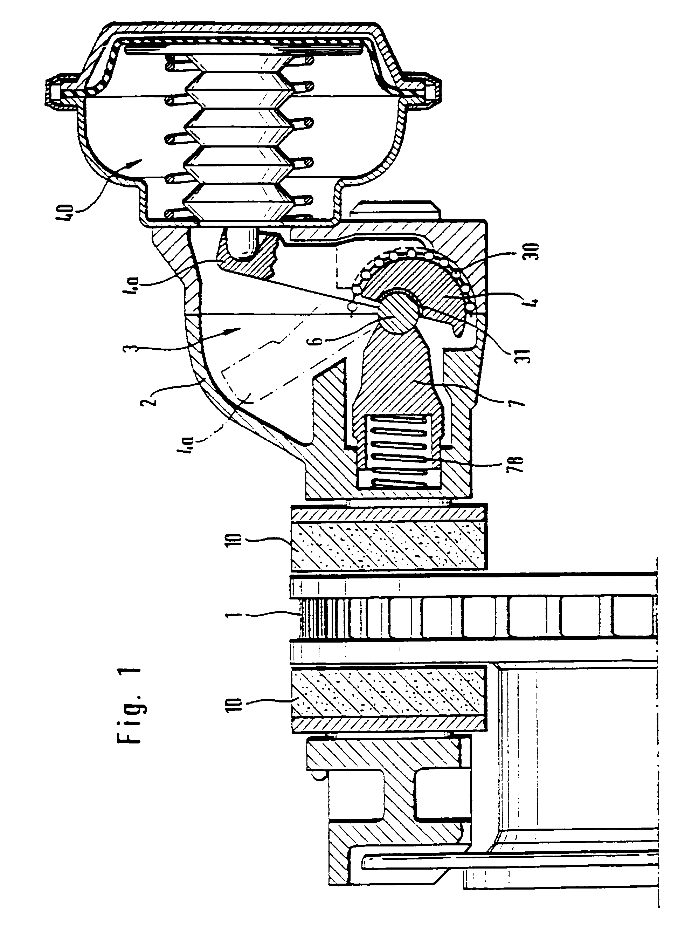

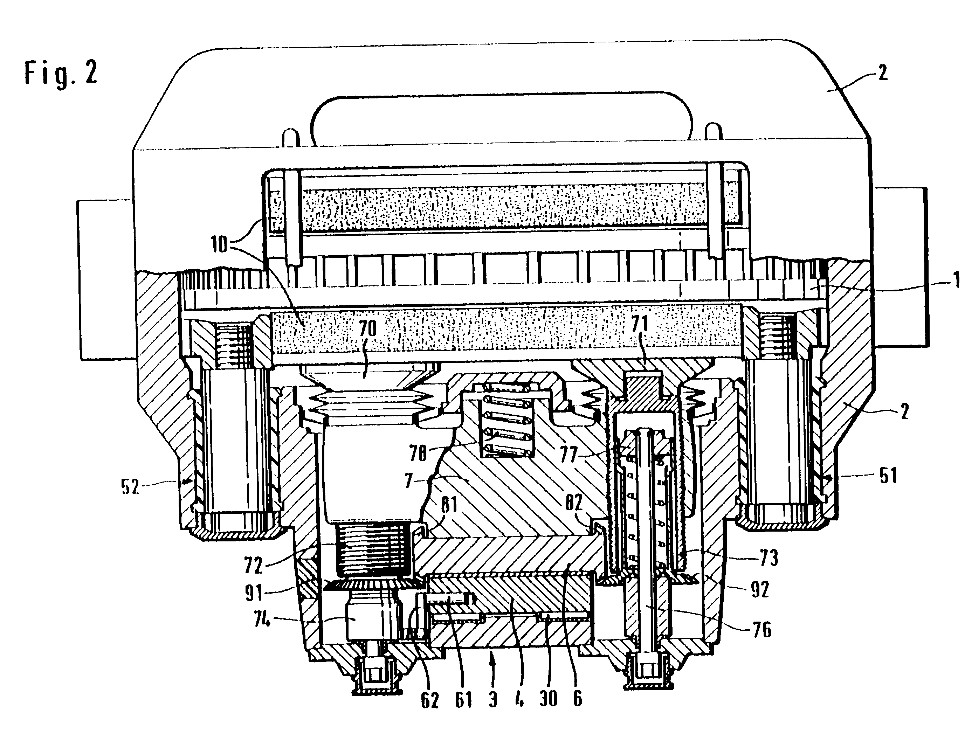

Wie aus den Figuren 1, 2 und 4 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

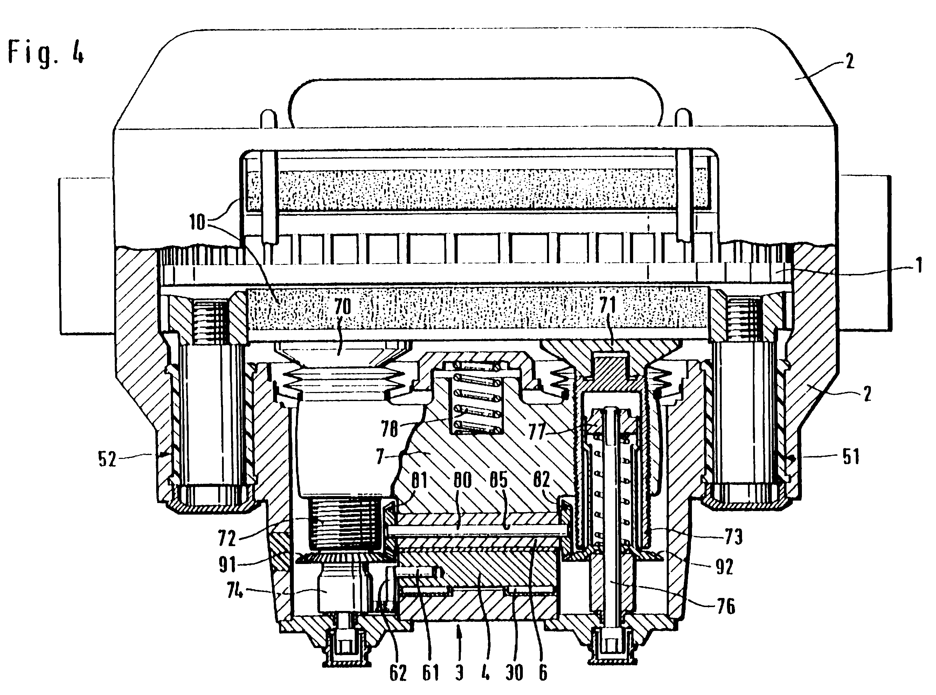

Auf der in Fig. 1 rechten bzw. der in den Fig. 2 und 4 unteren Seite der Bremsscheibe 1 ist eine schematisch mit dem Bezugszeichen 3 bezeichnete zweispindelige Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der Einbauraum für die Bremsscheibe begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

Wie insbesondere den Längsschnitten der Figuren 2 und 4 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Der genaue Aufbau einer bevorzugten Ausführungsform der Nachstelleinrichtung ist in der DE-OS 40 34 165 der Anmelderin beschrieben, so daß für nähere Einzelheiten auf diese Druckschrift, auf die hiermit vollinhaltlich bezug genommen wird, verwiesen sei.

Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. Diese Drehung der Nachstelleinrichtung 74 wird vorteilhaft beispielsweise mit Hilfe zweier am Drehhebel 4 radial auskragend ausgebildeter Stifte 61 erreicht, die um einen geringen Winkelbetrag zueinander versetzt sind und deren Enden in entsprechende Ausnehmungen eines Antriebshebels 62 der Nachstelleinrichtung 74 eingreifen. Der genaue Aufbau einer derartigen Drehantriebseinrichtung für die Nachstelleinrichtung ist in der DE-OS 42 04 307 der Anmelderin beschrieben, so daß für nähere Einzelheiten auf diese Druckschrift, auf die hiermit vollinhaltlich bezug genommen wird, verwiesen sei. Es sei jedoch darauf hingewiesen, daß die Art des Drehantriebs der Nachstelleinrichtung für die Erfindung nicht wesentlich ist; es ist alleine wichtig, daß bei jeder Betätigung der Bremse ein ausreichend starkes Nachstell-Drehmoment erzeugt und auf die Nachstelleinrichtung übertragen wird.

Im Inneren der gegenüberliegenden Stellspindel 73 ist keine Nachstelleinrichtung, sondern lediglich eine Mitnehmervorrichtung angeordnet, die aus einem Zahnrad 77 gebildet ist, das in eine entsprechende Axialverzahnung der Stellspindel 73 eingreift und an einer Welle 76 befestigt ist, die im Gehäuse gelagert ist, wie es aus der Fig.2 unmittelbar ersichtlich ist. Wie bereits eingangs erläutert wurde ist es alternativ hierzu auch möglich, in der Stellspindel 73 ebenfalls eine der Nachstelleinrichtung 74 entsprechende Nachstelleinrichtung vorzusehen, was ggf. den Vorteil hat, daß das Gesamt-Nachstelldrehmoment verdoppelt werden kann. Jedoch verteuert diese Lösung die Zuspannvorrichtung, so daß vorzugsweise von der hier beschriebenen Mitnehmervorrichtung Gebrauch gemacht wird.

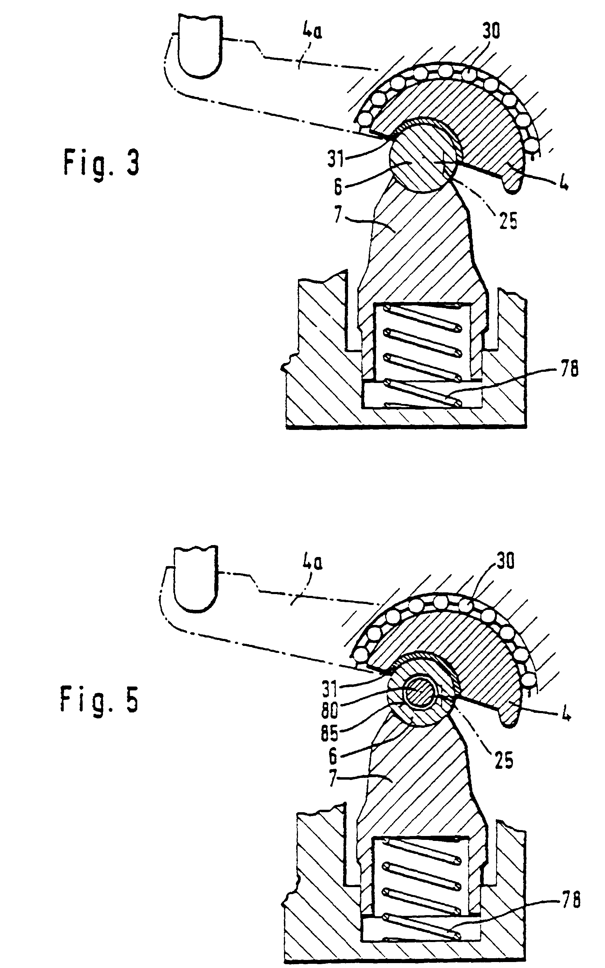

Wie beispeilsweise aus Fig.2 ersichtlich ist, ist mit der Nachstelleinrichtung 74 ein Kegelrad 91 drehfest gekoppelt, wobei, wie später noch erläutert werden wird, ggf. eine axiale Verschiebbarkeit des Kegelrads 91 vorgesehen ist. Die Welle 76 der Mitnehmervorrichtung der anderern Stellspindel 73 weist ebenfalls ein drehfest gekoppeltes und ggf. axial verschiebbares Kegelrad 92 auf. Beide Kegelräder 91 und 92 kämmen mit den Zähnen eines Kegelrads 81 bzw. 82, wobei diese Kegelräder im Ausführungsbeispiel der Fig.2 und 3 an den Stirnseiten des Exzenters 6 (ggf. einstückig) angebracht sind, während in den Ausführungsbeispielen der Fig.4 bis 8 eine Welle 80 in einer Längsbohrung 85 gelagert ist und die Kegelräder 81 und 82 an deren Enden z.B. durch Verschraubung oder auf andere geeignete Weise (z.B. Aufschrumpfung) befestigt sind. Durch die Kegelräder 81 und 91 sowie 82 und 92 wird jeweils ein Winkeltrieb gebildet, so daß die Nachstelleinrichtung 74 über den Exzenter 6 bzw. die Welle 80 drehfest mit der Mitnehmervorrichtung der Stellspindel 73 gekoppelt ist. Die Stellspindel 73 wird daher synchron mit der Stellspindel 72 gedreht, so daß die Kegelräder 81, 82, 91 und 92 sowie der Exzenter 6 bzw. die Welle 80 die erfindungsgemäße Synchronisationseinrichtung bilden.

Nachfolgend wird zum besseren Verständnis der Funktionsweise der erfindungsgemäßen Synchronisationseinrichtung das Arbeitsprinzip der Zuspanneinrichtung kurz erläutert.

Bei Druckluftbeaufschlagung des Bremszylinders 40 wird der Betätigungsarm 4a gemäß Fig. 1 nach links verschwenkt, wodurch' der am Drehhebel 4 wirkende Exzenter 6 um eine entsprechend den Hebelgesetzen verringerte Strecke gleichfalls nach links verschoben wird. Die Traverse 7 wird daher entgegen der vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Da das Außengewinde der Stellspindeln 72 und 74 und das jeweils zugeordnete Innengewinde der Traverse 7 so dimensioniert sind, daß im druckbeaufschlagten Zustand entgegen der Zuspannrichtung eine Selbsthemmung auftritt, können sich die Stellspindeln nicht in diese Richtung wegbewegen, so daß der Bremsdruck solange aufrechterhalten bleibt, bis der Drehhebel 4 freigegeben wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbakken der Fall ist, werden die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt.

Die erste, anhand der Fig.2 und 3 gezeigte Ausführungsform der erfindungsgemäßen Synchronisationseinrichtung überträgt die Nachstell-Drehbewegung der Nachstelleinrichtung 74 mittels des als Kraftübertragungswelle dienenden Exzenters 6 (der im vorliegenden Ausführungsbeispiel somit eine Exzenterwalze bildet) auf die Stellspindel 73. Da gemäß obiger Beschreibung bei Vorliegen eines auszugleichenden Abriebs der Bremsbacken noch vor dem Anliegen der Bremsbacken 10 an der Bremsscheibe 1 ein Nachstellmoment auftritt, wird die Exzenterwalze 6 zum Zeitpunkt der gewünschten Synchronisation lediglich von der Kraft der Feder 78 in das halbschalenförmige Lager der Traverse 7 gedrückt. Die hierbei vorliegende Reibungskraft kann von der Nachstelleinrichtung 74 überwunden werden, ohne daß die in der Nachstelleinrichtung 74 angeordnete Rutschkupplung anspricht; erst wenn die Bremsbacken 10 an der Bremsscheibe 1 anliegen wird diese Reibungskraft so hoch, daß die Exzenterwalze 6 nicht mehr gedreht werden kann, wobei zu diesem Zeitpunkt ohnehin die Rutschkupplung anspricht, wie oben erläutert wurde. Im unbetätigten Zustand der Bremse bzw. des Drehhebels 4 wirkt auf die Exzenterwalze 6 ebenfalls die von der Feder 78 erzeugte Reibungskraft ein, so daß jegliche Drehung der Stellspindeln 72 und 73 über die Winkeltriebe und die Nachstelleinrichtung 74 bzw. die Mitnehmervorrichtung gesperrt ist. Dieser Effekt ist jedoch von Vorteil, da hierdurch erreicht wird, daß im Fahrbetrieb ggf. auftretende Vibrationen nicht in der Lage sind, eine ungewünschte Verdrehung der Stellspindeln 72 und 73 und damit eine Änderung des eingestellten Werts des Lüftspiels hervorzurufen. Somit kann mit dieser Ausführungsform der Synchronisationseinrichtung eine im Stand der Technik bei Auftreten von Vibrationen ggf. erforderliche Hemmvorrichtung eingespart werden.

Wie aus Fig.3 ersichtlich ist, liegt der Mittelpunkt der Exzenterwalze aufgrund der erforderlichen Exzentrizität um eine bestimmte Strecke neben dem mit dem Bezugszeichen 25 bezeichneten Drehpunkt des Drehhebels 4. Demzufolge verschiebt sich der Drehpunkt der Exzenterwalze bei Betätigung des Drehhebels 4 in gleicher Weise wie die Traverse 7, so daß die Zähne der Kegelräder 81 und 82 um einen entsprechenden Betrag aus den Zähnen der Kegelrädern 91 und 92 herausgleiten, falls diese Kegelräder 91 und 92 fest mit der Nachstelleinrichtung 74 bzw. der Mitnehmervorrichtung verbunden sind. Jedoch stellt eine derartige teilweise Verringerung des gegenseitigen Eingriffs der den Winkeltrieb bildenden Kegelräder bei geeigneter Dimensionierung aller Funktionsgruppen insofern kein Problem dar, als eine eventuell von der Nachstelleinrichtung 74 bereits eingeleitete Verstellung spätestens dann zur anderern Stellspindel 73 übertragen wird, wenn sich die Traverse 7 nach Ende des betreffenden Bremsvorgangs wieder in ihre Ruhelage zurückbewegt, da dann die Kegelräder wieder in vollständigen Eingriff geraten. Im übrigen kann durch geeignete Formgebung der Zähne der Kegelräder erreicht werden, daß selbst bei nur teilweisem Eingriff eine Kraftübertragung erfolgt. Darüber hinaus kann trotz dieser Ortsverschiebung der Achse der Synchronisationswelle bzw. Exzenterwalze 6 ein kontinuierlich guter Eingriff der Kegelräder erreicht werden, wenn die Kegelräder der Nachstelleinrichtung 74 bzw. der Mitnehmervorrichtung jeweils axial verschiebbar befestigt werden, so daß ggf. unter zusätzlicher Verwendung eines (nicht gezeigten) Federelements eine Nachführung dieser Kegelräder zu denen der Exzenterwalze 6 erreicht werden kann.

Im Falle dieser ersten Ausführungsform der Synchronisationseinrichtung ist noch anzumerken, daß die Kegelräder 81 und 82 einstückig mit dem Exzenter 6 ausgebildet sein können; falls dies herstellungstechnisch günstiger ist, kann jedoch auch in Erwägung gezogen werden, entsprechende Kegelräder durch Verschrauben oder auf andere Weise an den stirnseitigen Enden des Exzenters 6 zu befestigen. In diesem Zusammenhang ist auch anzumerken, daß die Kegelräder 81 und 82 in der Praxis einen größeren Durchmesser als der Exzenter 6 aufweisen, so daß die Kegelräder 81 und 82 ein entsprechendes Maß überstehen; hierdurch wird der Exzenter 6 seitlich gesichert, was in jedem Fall von Vorteil ist.

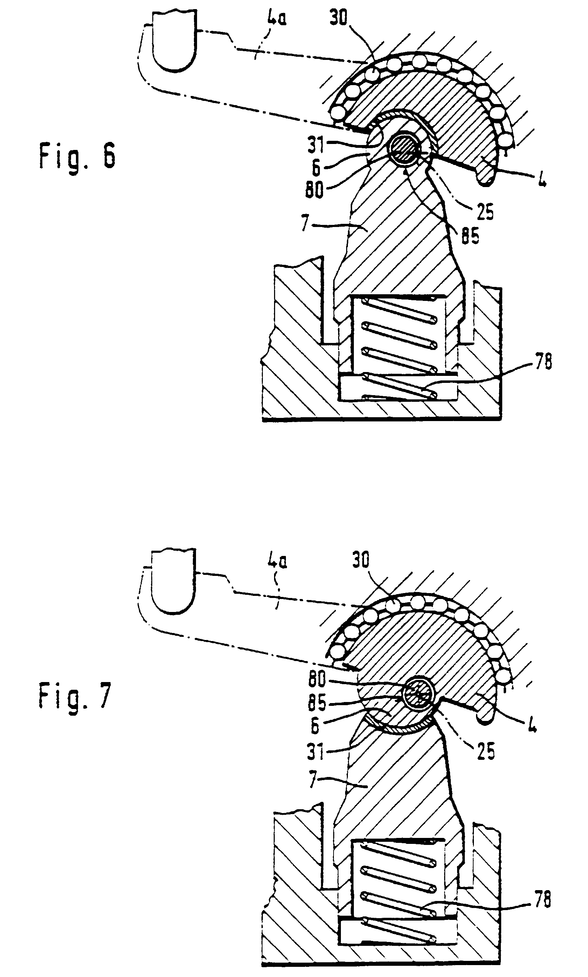

In den Fig. 4 und 5 ist eine alternative Ausführungsform der Synchronisationseinrichtung gezeigt, bei der die Exzenterwalze das Synchronisationsmoment nicht selber sondern mittels einer in ihr gelagerten Welle 80 überträgt, wie aus den Figuren ohne weiteres ersichtlich ist. Diese Ausführungsform unterscheidet sich in ihrer Wirkungsweise von der vorhergehenden somit lediglich darin, daß die Übertragung des Synchronisationsmoments zu keinem Zeitpunkt durch Reibungskräfte beeinträchtigt bzw. völlig gesperrt ist, so daß sie insbesondere für solche Anwendungen in Frage kommt, wo diese Eigenschaften erforderlich sind. Auch bei dieser Ausführungsform kann ggf. das Vorsehen einer axialen Verschiebbarkeit der Kegelräder 91 und 92 in Erwägung gezogen werden, falls ein kontinuierlich guter gegenseitiger Eingriff der Kegelräder erforderlich ist.

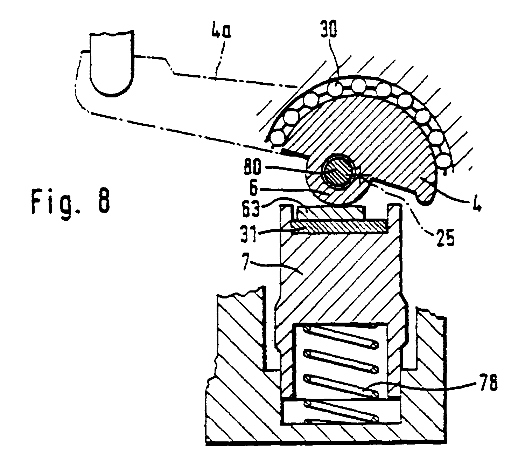

In den Figuren 6 bis 8 sind Ausführungsformen der Hebelmechanik gezeigt, bei denen der Exzenter 6 einstückig mit der Traverse (Fig.6) bzw. dem Drehhebel 4 (Figuren 7 und 8) ausgebildet ist. Im Falle der beiden letzteren Ausführungsformen ist daher die Gegenlagerung 31 des Exzenters 6 in der Traverse 7 ausgebildet, wobei im Falle der Ausführungsform der Fig.8 zusätzlich eine Druckplatte 63 zwischengeschaltet ist. Wirkungsweise und besondere Vorteile der jeweiligen Ausgestaltung des Exzenters sind in der eingangs genannten DE-OS 42 12 384 der Anmelderin ausführlich erläutert, so daß bezüglich näherer Einzelheiten auf diese verwiesen wird.

Bei diesen Ausführungsformen der Hebelmechanik ist im Bereich des Exzenters 6 eine Längsbohrung 85 vorgesehen, die eine Welle 80 aufnimmt, an deren Stirnseiten in gleicher Weise wie bei der Ausführungsform der Figuren 4 und 5 jeweils ein Kegelrad 91 bzw. 92 befestigt ist, so daß zur prinzipiellen Funktionsweise auf deren Beschreibung verwiesen werden darf. Im Unterschied zu der Ausführungsform der Figuren 4 und 5 ist jedoch anzumerken, daß bei dem einstückig ausgebildeten Exzenter 6 die Möglichkeit besteht, die Längsbohrung 85 nicht exakt im Zentrum des Exzenters 6 anzuordnen, sondern vielmehr etwas exzentrisch in Richtung zur Drehachse 25 des Drehhebels 4 hin. Im Idealfall ist es sogar möglich, die Längsbohrung 85 genau in der Drehachse 25 zu plazieren, falls der Durchmesser des Exzenters 6 und der der Längsbohrung dies zulassen. Durch diese Anordnung der Längsbohrung 85 kann daher erreicht werden, daß die im Exzenter 6 gelagerte Welle 80 trotz der Verschwenkung des Drehhebels 4 keine oder nur geringe Lageänderungen durchführt, so daß die Kegelräder ständig in genauem Eingriff sind bzw. sich nur geringfügig voneinander entfernen. Eine derartige Anordnung der Längsbohrung 85 des Exzenters 6 ist im Ausführungsbeispiel der Fig.7 gezeigt, wobei bei ausreichend Platz selbstverständlich auch die Ausführungsformen der Fig.6 und 8 entsprechend modifiziert werden könnten. So ist z.B. bei der Ausführungsform der Fig.6 eine Lage der Längsbohrung angedeutet, die etwa zwischen dem Mittelpunkt des Exzenters 6 und der Drehachse 25 liegt, da diese Anordnung aufgrund der Geometrie des Exzenters 6 und des Durchmessers der Längsbohrung 85 einen guten Kompromiss im Hinblick auf die erzielbare Konstanz des gegenseitigen Eingriffs der Kegelräder darstellt.

Ggf. ist es möglich, für die Kegelräder 81, 82, 91 und 92 Kunststoff zu verwenden, so daß die Herstellungskosten verringert werden können. Für die Lagerung der Welle 80 kann erforderlichenfalls ein (nicht gezeigtes) Gleitlager verwendet werden. Im übrigen wird bezüglich noch weiterer Vorteile und Wirkungen der Erfindung ausdrücklich auf die Offenbarung der Figuren verwiesen.

## Patentansprüche

1. Druckluftbetätigte Scheibenbremse mit einem eine Bremsscheibe (1) umfassenden Bremssattel (2), auf dessen einer Seite eine Zuspannvorrichtung (3) mit einem Drehhebel (4, 4a) angeordnet ist, der um eine zur Ebene der Bremsscheibe (1) parallel verlaufende Drehachse (25) schwenkbar gelagert ist und bremsscheibenzugewandt mittels eines Exzenters (6) etwa längsmittig an einer sich parallel zur Drehachse (25) erstreckenden Traverse (7) anliegt, die bezüglich der Bremsscheibe (1) verschiebbar geführt ist und in der zwei mit einem Außengewinde versehene Stellspindeln (72, 73) in Parallelanordnung verstellbar verschraubt sind, die jeweils über ein an ihrem bremsscheibenseitigen Ende sitzendes Druckstück (70, 71) auf eine bezüglich der Bremsscheibe (1) verschiebbar gelagerte Bremsbacke (10) einwirken und die über eine Synchronisationseinrichtung drehfest miteinander gekoppelt sind, wobei in mindestens einer der zwei Stellspindeln (72, 73) eine axial verschiebbare Nachstelleinrichtung (74) drehfest angeordnet ist, die bei jeder Betätigung des Drehhebels (4, 4a) auf die betreffende Stellspindel ein bestimmtes Nachstell-Drehmoment ausübt, das die Synchronisationseinrichtung auf eine in der anderen Stellspindel angeordnete weitere Nachstelleinrichtung (74) bzw. auf eine die andere Stellspindel drehfest koppelnde Mitnehmervorrichtung *(76)* überträgt,
*dadurch gekennzeichnet,* daß
als Synchronisationseinrichtung eine im wesentlichen im Bereich der Achse des Exzenters *(6)* verlaufende Welle *(6; 80)* vorgesehen ist, die an jeder Stirnseite ein Kegelrad *(81, 82)* aufweist, das mit einem entsprechenden Kegelrad *(91, 92)* der Nachstelleinrichtung *(74)* bzw. der Mitnehmervorrichtung *(76)* zur Bildung eines Winkeltriebs kämmt.

2. Scheibenbremse nach Anspruch 1, bei der der Exzenter durch eine Walze *(6)* gebildet ist, die in der Traverse *(7)* und im Drehhebel (*4, 4a*) jeweils in einem schalenförmigen Lagerbett ruht, dadurch gekennzeichnet, daß die Exzenterwalze *(6)* als Welle der Synchronisationseinrichtung vorgesehen ist.

3. Scheibenbremse nach Anspruch 2, dadurch gekennzeichnet, daß die Kegelräder *(81, 82)* einstückig mit der Exzenterwalze *(6)* ausgebildet sind.

4. Scheibenbremse nach Anspruch 1, bei der der Exzenter durch eine Walze *(6)* gebildet ist, die in der Traverse *(7)* und im Drehhebel (*4, 4a*) jeweils in einem schalenförmigen Lagerbett ruht, dadurch gekennzeichnet, daß die Exzenterwalze *(6)* rohrförmig ist und zur Lagerung der Welle *(80)* der Synchronisationseinrichtung dient.

5. Scheibenbremse nach Anspruch 1, bei der der Exzenter *(6)* einstückig mit der Traverse *(7)* oder dem Drehhebel (*4, 41*) ausgebildet ist, dadurch gekennzeichnet, daß im Exzenter *(6)* eine Längsbohrung *(85)* ausgebildet ist, die zur Lagerung der Welle *(80)* der Synchronisationseinrichtung dient.

6. Scheibenbremse nach Anspruch 5, dadurch gekennzeichnet, daß die Längsbohrung *(85)* exzentrisch zur Längsachse des Exzenters *(6)* angeordnet ist, vorzugsweise konzentrisch zur Drehachse *(25)* des Drehhebels *(4, 4a)*.

7. Scheibenbremse nach einem der Ansprüche 4 bis 6, dadurch gekennzeichnet, daß die Welle *(80)* in der Längsbohrung *(85)* gleitgelagert ist.

8. Scheibenbremse nach einem der Ansprüche 1 bis 7, dadurch gekennzeichnet, daß die Kegelräder *(91, 92)* der Nachstelleinrichtung (*74*) bzw. der Mitnehmervorrichtung (*76*) an dieser jeweils axial verschiebbar befestigt sind.

9. Scheibenbremse nach einem der Ansprüche 1 bis 8, dadurch gekennzeichnet, daß die Kegelräder *(91, 92)* der Nachstelleinrichtung *(74)* bzw. der Mitnehmervorrichtung *(76)* sowie die Kegelräder *(81, 82)* der Welle (*80*) aus Kunststoff gebildet sind.

## Claims

1. Compressed air activated disc brake with a brake caliper (2) including a brake disc (1), on one side of which brake caliper is arranged a brake activation device (3) with a rotary lever (4, 4a), which is pivotably mounted around a rotational axis (25) running parallel to the plane of the brake disc (1) and is linked to the brake disc by an eccentric part (6) provided approximately longitudinally centrally on a crosspiece (7) extending parallel to the rotational axis (25), the crosspiece being guided displaceably with respect to the brake disc (1) and in which two adjustment spindles (72, 73), provided with an external thread and arranged in parallel, are adjustably screwed, which adjustment spindles act by means of a pressure part (70, 71) on the end of the adjustment spindles facing the side of the brake disc on a brake pad (10) mounted displaceably with respect to the brake disc (1) and which are rotationally fixedly coupled with each other by means of a synchronisation device, an axially displaceable adjusting device (74) being rotationally fixedly arranged on at least one of the two adjustment spindles (72, 73), which exerts a fixed adjustable torque on the adjustment spindle concerned with each activation of the rotary lever (4, 4a), the adjustable torque being transmitted by the synchronisation device to a further adjusting device (74) arranged in the other adjusting spindle or to a carrier device (76) rotationally fixedly coupled to the other adjusting spindle, characterised in that a shaft (6; 80) running essentially in the region of the axis of the eccentric means (6) is provided as a synchronisation device, having a bevel gear (81, 82) on each end face, each meshing with a corresponding bevel gear (91, 92) on the adjusting device (74) or carrier device (76) to form a bevel drive.

2. Disc brake according to claim 1, in which the eccentric part is a rod (6) which rests in a dish-shaped mounting bed in each of the crosspiece (7) and the rotary lever (4, 4a), characterised in that the eccentric rod (6) is provided as the shaft of the synchronisation device.

3. Disc brake according to claim 2, characterised in that the bevel gears (81, 82) are constructed in one piece with the eccentric rod (6).

4. Disc brake according to claim 1, in which the eccentric part is a rod (6) which rests in each of the crosspiece (7) and the rotary lever (4, 4a) in a dish-shaped mounting bed, characterised in that the eccentric rod (6) is tubular and serves to hold the shaft (80) of the synchronisation device.

5. Disc brake according to claim 1, in which the eccentric part is constructed as one piece with the crosspiece (7) or the rotary lever (4, 41), characterised in that a longitudinal bore (85) is formed in the eccentric part (6), which serves for the mounting of the shaft (80) of the synchronisation device.

6. Disc brake according to claim 5, characterised in that the longitudinal bore (85) is arranged eccentrically to the longitudinal axis of the eccentric part (6), preferably concentrically to the rotational axis (25) of the rotary lever (4, 4a).

7. Disc brake according to one of claims 4 to 6, characterised in that the shaft (80) is slidably mounted in the longitudinal bore (85).

8. Disc brake according to one of claims 1 to 7, characterised in that the bevel gears (91, 92) of the adjusting device (74) or the carrier device (76) are fixed on the device so as to be axially displaceable.

9. Disc brake according to one of claims 1 to 8, characterised in that the bevel gears (91, 92) of the adjusting device (74) and the carrier device (76), as well as the bevel gears (81, 82) of the shaft (80) are made from plastics.

## Revendications

1. Frein à disque pneumatique comportant un étrier de frein (2) qui embrasse un disque de frein (1) et sur l'un des côtés duquel est disposé un dispositif de serrage (3) comportant un levier pivotant (4, 4a), qui est monté de manière pivotable autour d'un axe de rotation (25) s'étendant parallèlement au plan du disque de frein (1) et s'appuie, du côté tourné vers le disque de frein, au moyen d'un excentrique (6), sensiblement à mi-longueur, sur une traverse (7) s'étendant parallèlement à l'axe de rotation (25), qui est guidée en translation par rapport au disque de frein (1) et dans laquelle sont vissées de manière ajustable, dans des positions parallèles, deux broches de réglage (72, 73) munies d'un filetage mâle, qui agissent chacune, par l'intermédiaire d'une pièce d'appui (70, 71) calée à leur extrémité située du côté du disque de frein (1), sur une mâchoire de frein (10) montée mobile par rapport au disque de frein et qui sont couplées l'une à l'autre en rotation par l'intermédiaire d'un dispositif de synchronisation, un dispositif de rattrapage de jeu (74) mobile axialement étant disposé, de manière fixe en rotation, dans au moins l'une des deux broches de réglage (72,73), dispositif de rattrapage de jeu qui, lors de chaque actionnement du levier pivotant (4, 4a), exerce un couple de rattrapage défini sur la broche de réglage correspondante, couple que le dispositif de synchronisation transmet à un dispositif de rattrapage de jeu (74) supplémentaire disposé dans l'autre broche de réglage, ou à un dispositif d'entraînement (76) couplé en rotation à l'autre broche de réglage,
caractérisé en ce qu'il est prévu, comme dispositif de synchronisation, un arbre (6; 80) s'étendant essentiellement au voisinage de l'axe de l'excentrique (6), et qui comporte à chaque face d'extrémité un pignon conique (81, 82), qui engrène avec un pignon conique correspondant (91, 92) du dispositif de rattrapage de jeu (74), respectivement du dispositif d'entraînement (76), pour former une commande par engrenage.

2. Frein à disque selon la revendication 1, dans lequel l'excentrique est constitué par un rouleau (6) qui repose dans la traverse (7) et dans le levier pivotant (4, 4a), chaque fois dans un palier en forme de coque, caractérisé en ce que le rouleau excentrique (6) est prévu comme arbre du dispositif de synchronisation.

3. Frein à disque selon la revendication 2, caractérisé en ce que les pignons coniques (81, 82) forment une seule pièce avec le rouleau excentrique (6).

4. Frein à disque selon la revendication 1, dans lequel l'excentrique est constitué par un rouleau (6), qui repose dans la traverse (7) et dans le levier pivotant (4, 4a), respectivement dans un palier en forme de coque, caractérisé en ce que le rouleau excentrique (6) est de forme tubulaire et sert de support à l'arbre (80) du dispositif de synchronisation.

5. Frein à disque selon la revendication 1, dans lequel l'excentrique (6) forme une seule pièce avec la traverse (7) ou le levier pivotant (4, 41), caractérisé en qu'est formé, dans l'excentrique (6), un alésage longitudinal (85) qui sert de support à l'arbre (80) du dispositif de synchronisation.

6. Frein à disque selon la revendication 5, caractérisé en ce que l'alésage longitudinal (85) est disposé de manière excentrée par rapport à l'axe longitudinal de l'excentrique (6), de préférence concentriquement à l'axe de rotation (25) du levier pivotant (4, 4a).

7. Frein à disque selon l'une des revendications 4 à 6, caractérisé en ce que l'arbre (80) est supporté de manière coulissante dans l'alésage longitudinal (85).

8. Frein à disque selon l'une des revendications 1 à 7, caractérisé en ce que les pignons coniques (91, 92) du dispositif de rattrapage de jeu (74), respectivement du dispositif d'entraînement (76), sont fixés à chacun de ceux-ci de manière axialement mobile.

9. Frein à disque selon l'une des revendications 1 à 8, caractérisé en ce que les pignons coniques (91, 92) du dispositif de rattrapage de jeu (74), respectivement du dispositif d'entraînement (76), ainsi que les pignons coniques (81, 82) de l'arbre (80) sont constitués de matière plastique.
